# EUROPÄISCHE PATENTSCHRIFT

(11) **EP 0 330 938 B1**
(45) Veröffentlichungstag und Bekanntmachung des Hinweises auf die Patenterteilung: **22.09.1993**
(21) Anmeldenummer: 89102820.1
(22) Anmeldetag: 18.02.1989
(51) Int. Cl.: B65D 85/10

(54) **Zigaretten-Packung, insbesondere Klappschachtel**
Package for cigarettes, especially a hinged-lid box
Emballage pour cigarettes, notamment boîte à couvercle rabattant

(30) Priorität: 03.03.1988 DE 3806818
(43) Veröffentlichungstag der Anmeldung: 06.09.1989
(73) Patentinhaber: Focke & Co. (GmbH & Co.), 27283 Verden (DE)
(72) Erfinder: Focke, Heinz, D-2810 Verden (DE); Liedtke, Kurt, D-2810 Verden (DE)
(74) Vertreter: Bolte, Erich, Dipl.-Ing.

(56) Entgegenhaltungen:
- DE-A- 3 410 217
- US-A- 2 984 384

## Beschreibung

Die Erfindung betrifft eine Zigaretten-Packung, insbesondere Klappschachtel, bei der eine Zigaretten-Gruppe in einen Innenzuschnitt eingehüllt ist mit einem vom Innenzuschnitt aufgrund von Stanzungen (Perforationen) durch Abziehen abtrennbaren Lappen (Flap), wobei an den Lappen ein Aushebestreifen anschließt, der sich in einer Vorderwand des Innenzuschnitts bis wenigstens in den Bereich einer Bodenwand desselben erstreckt.

Durch die Erfindung werden vorrangig (Zigaretten-)Packungen in der Ausführung als Klappschachtel (Hinge-Lid-Packung) angesprochen. Dieser weltweit stark verbreitete Packungstyp ist so aufgebaut, daß an einem Schachtelteil ein Klappdeckel angebracht ist, der über eine Scharnierverbindung mit einer Rückwand des Schachtelteils verbunden ist. Im Schachtelteil ist bei derartigen Klappschachteln üblicherweise ein Kragen angebracht, der sich im Bereich von Vorderwand und Seitenwänden des Schachtelteils erstreckt und teilweise aus diesem herausragt.

Der Packungsinhalt, nämlich eine Zigaretten-Gruppe, ist üblicherweise in einen Innenzuschnitt aus Stanniol eingehüllt. Dieser Innenzuschnitt ist so um den Packungsinhalt (Zigaretten-Gruppe) herumgefaltet, daß im Bereich der aufrechten, schmalen Seitenfläche sowie im Bereich einer oberen Stirnfläche einander teilweise überdeckende Faltlappen des Innenzuschnitts gebildet sind.

Zu der üblichen Konstruktion einer Klappschachtel bzw. eines Innenzuschnitts derselben gehört ein durch Stanzungen bzw. Perforationen markierter, abziehbarer Lappen (sogenannter Flap). Dieser Lappen wird bei Ingebrauchnahme der Zigaretten-Packung abgezogen, derart, daß ein der Vorderwand der Packung zugekehrter Bereich des Packungsinhalts freiliegt. Zu dem abziehbaren Lappen gehört ein oberer, aus dem Schachtelteil herausragender Bereich der Vorderwand sowie die angrenzenden Teile der Seitenwand. Des weiteren wird ein vornliegender Teil der Stirnwand des Innenzuschnitts mit dem Flap beseitigt.

Bei einem Packungstyp dieser Art ist die Anbringung eines Aushebestreifens als Teil der Innenumhüllung bereits bekannt (DE-OS 34 10 217). Der Aushebestreifen hat die Aufgabe, durch Ziehen einen Teil des Packungsinhalts, nämlich einige, insbesondere vornliegende Zigaretten anzuheben, so daß deren Entnahme aus der Packung erleichtert ist. Bei der bekannten Packung ist der Aushebestreifen durch Stanzungen (Trennschnitte mit Restverbindungen) im Bereich einer Vorderwand, einer Bodenwand und eines Teils einer Rückwand des Innenzuschnitts markiert. Ein oberes Ende des Aushebestreifens ist mit dem abziehbaren Lappen (Flap) verbunden. Beim Abziehen des Lappens wird so der Aushebestreifen gleichzeitig betätigt, schließlich durch einen kräftigen Ruck abgerissen und aus der Packung herausgezogen.

Bei dieser bekannten Zigaretten-Packung ist vorrangig daran gedacht, den Aushebestreifen als Teil der Innenumhüllung nur einmal zu betätigen, nämlich im Zusammenhang mit dem Abziehen des Flaps. Danach, nämlich bei der Entnahme weiterer Zigaretten, kann der Aushebestreifen nicht mehr wirksam werden.

Der Erfindung liegt die Aufgabe zugrunde, eine Zigaretten-Packung der eingangs genannten Art dahingehend zu verbessern, daß der mit dem Innenzuschnitt integrierte Aushebestreifen mehrfach anwendbar und leichter zu handhaben ist.

Zur Lösung dieser Aufgabe ist die erfindungsgemäße Packung dadurch gekennzeichnet, daß sich der Aushebestreifen bis in den Bereich des abziehbaren Lappens erstreckt und innerhalb desselben durch eine etwa U-förmige Lappenstanzlinie abgegrenzt ist, derart, daß beim Abziehen des Lappens eine gegenüber dem übrigen Teil des Innenzuschnitts bzw. gegenüber der Vorderwand desselben freiliegende Grifflasche als Endbereich des Aushebestreifens freigelegt ist.

Bei der erfindungsgemäßen Ausgestaltung erstreckt sich der Aushebestreifen als Bestandteil des Innenzuschnitts bis in den Bereich des abziehbaren Lappens. Sobald die Packung in Gebrauch genommen und der Lappen abgezogen wird, löst sich dieser vom Aushebestreifen. Zum Anheben einzelner Zigaretten kann nun der Aushebestreifen mehrmals betätigt werden.

Eine erleichterte Handhabung ist erfindungsgemäß dadurch gegeben, daß im Bereich des abziehbaren Lappens eine Grifflasche am oberen Ende des Aushebestreifens gebildet ist. Diese ist durch eine entsprechende Perforation (U-förmige Perforationslinie) begrenzt derart, daß sie beim Abziehen des Lappens freikommt.

Beim Abziehen des Lappens (Flap) wird demnach stets eine Grifflasche eines als Teil des Innnenzuschnitts ausgebildeten Aushebestreifens freigelegt. Mindestens diese Grifflasche ragt aus dem Schachtelteil der Packung bzw. aus dem Bereich des Kragens heraus und kann dadurch bequem betätigt werden.

Ein Ausführungsbeispiel der Erfindung wird nachfolgend anhand der Zeichnungen näher erläutert. Es zeigt:
- Fig. 1: einen ausgebreiteten Innenzuschnitt (Stanniol) für eine Zigaretten-Packung,

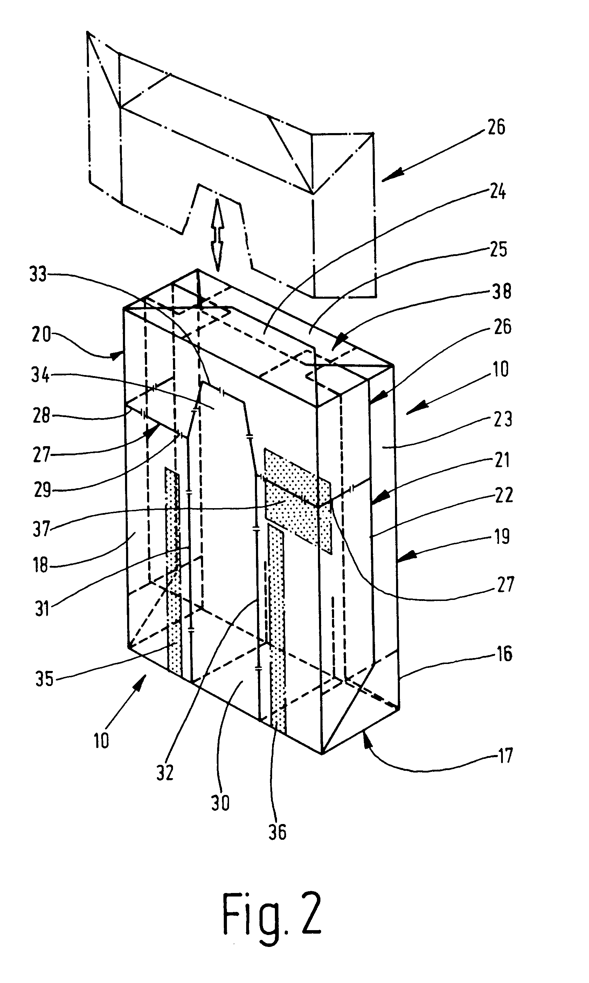

- Fig. 2: eine in einen Innenzuschnitt eingehüllte Zigaretten-Gruppe als Inhalt einer Packung in perspektivischer Darstellung,
- Fig. 3: einen Vertikalschnitt durch eine in einen Innenzuschnitt eingehüllte Zigaretten-Gruppe bei betätigtem Aushebestreifen, in einer offenen Klappschachtel.

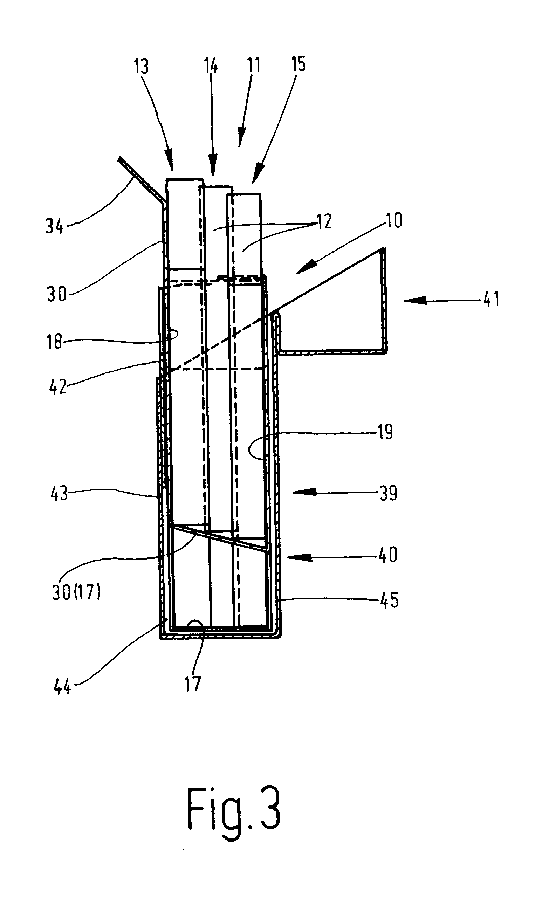

In den Zeichnungen sind Einzelheiten des Inhalts einer Klappschachtel 39 gezeigt. Die Klappschachtel 39 (Fig. 3) ist von konventioneller Bauart, besteht nämlich aus einem Schachtelteil 40 und einem mit diesem schwenkbar verbundenen Klappdeckel 41. In dem Schachtelteil 40 ist ein Kragen 42 angeordnet, der sich im Bereich von Schachtelvorderwand 43 und Schachtelseitenwand 44 erstreckt. Der Kragen ist mit den vorgenannten Schachtelwänden durch Klebung verbunden und ragt aus dem Schachtelteil 40 heraus. In Schließstellung wird dieser Teil durch den Klappdeckel 41 umfaßt.

Der Packungsinhalt ist ein blockförmiges Gebilde, nämlich ein Zigarettenblock 10. Dieser besteht aus einer Zigaretten-Gruppe 11 aus einer Mehrzahl von Zigaretten 12, die in Reihen - im vorliegenden Falle drei Reihen 13, 14, 15 - angeordnet und von einem Innenzuschnitt 16 umgeben sind.

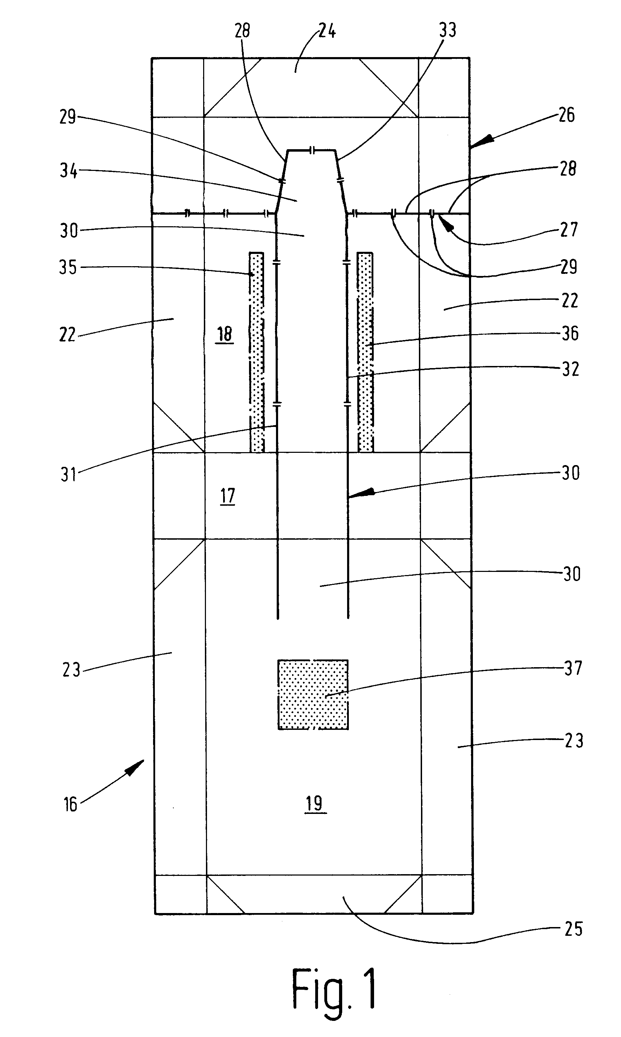

Der Innenzuschnitt 16 besteht üblicherweise aus Stanniol. Wie aus Fig. 1 ersichtlich, hat der Innenzuschnitt 16 eine rechteckige Gestalt. Zur Bildung des Zigarettenblocks 10 ist der Innenzuschnitt 16 derart um die Zigaretten-Gruppe 11 herumgefaltet, daß eine geschlossenen Bodenwand 17, eine Vorderwand 18 und eine Rückwand 19 entstehen. Seitenwände 20 und 21 sind durch einander teilweise überdeckende, mit der Vorderwand 18 und der Seitenwand 19 verbundene Seitenwandlappen 22, 23 gebildet. Eine der Bodenwand 17 gegenüberliegende, obere Stirnwand 38 besteht ebenfalls aus einander teilweise überdeckenden Stirnwandlappen 24 und 25, die einerseits mit der Vorderwand 18 und andererseits mit der Rückwand 19 des Innenzuschnitts 16 verbunden sind.

Um bei Ingebrauchnahme einer derart ausgebildeten Zigaretten-Packung einen oberen Bereich eines Teils der Zigaretten 12 freizulegen, ist der Innenzuschnitt 16 mit einem abreißbaren bzw. abziehbaren Lappen 26 - einem sogenannten Flap - versehen. Dieser erstreckt sich im oberen Bereich der Vorderwand 18 sowie der angrenzenden Seitenwandlappen 22 und des Stirnwandlappens 24. Der Innenzuschnitt 16 ist so gefaltet, daß der Stirnwandlappen 24 außenliegt und dadurch bei Ingebrauchnahme der Zigaretten-Packung erfaßt werden kann. Durch aufwärts gerichtetes Ziehen wird der Lappen 26 vom übrigen Teil des Innenzuschnitts abgetrennt.

Zu diesem Zweck ist der Lappen 26 durch eine im wesentlichen quergerichtete Stanzlinie 27 von dem übrigen Teil des Innenzuschnitts 16 abgegrenzt. Die Stanzlinie 27 besteht aus Trennschnitten bzw. Stanzungen 28 und Restverbindungen 29. Letztere werden beim Abziehen des Lappens 26 durchtrennt.

Die Besonderheit der Zigaretten-Packung ist ein Aushebestreifen 30, der innerhalb des Innenzuschnitts 16 markiert ist, und zwar bei dem dargestellten Ausführungsbeispiel in der Mitte desselben. Der Aushebestreifen 30 ist durch Seitenstanzlinien 31, 32 markiert und erstreckt sich innerhalb eines Teils der Vorderwand 18 über die Bodenwand 17 bis in die Rückwand 19, nämlich im unteren Bereich derselben. Die Anordnung ist so getroffen, daß die Seitenstanzlinien 31, 32 im Bereich der Vorderwand 18 einige, wenige Restverbindungen 29 aufweisen, während im Bereich der Bodenwand 17 und der Rückwand 19 die Seitenstanzlinien 31, 32 durchgehen.

Der Aushebestreifen 30 erstreckt sich bis an den Lappen 26, bei dem dargestellten Ausführungsbeispiel bis in den Bereich desselben. Der Aushebestreifen 30 ist gegenüber dem abziehbaren Lappen 26 ebenfalls durch eine leicht durchtrennbare Lappenstanzlinie 33 abgegrenzt, die bei dem dargestellten Ausführungsbeispiel U-förmig ausgebildet ist bzw. nach den Konturen eines Kegelstumpfes. Der Aushebestreifen 30 erstreckt sich so mit einem oberen Endbereich innerhalb des Lappens 26. Dieser Endbereich bildet eine Grifflasche 34 des Aushebestreifens 30.

Wird bei Ingebrauchnahme einer so ausgebildeten Zigaretten-Packung der Lappen 26 (Flap) abgezogen, bleibt der Aushebestreifen 30 innerhalb der Zigaretten-Packung. Die freigelegte Grifflasche 34 ragt aus dem Schachtelteil 40 bzw. aus dem durch den Kragen 42 umschlossenen Bereich heraus und kann von Hand erfaßt werden. Durch Ziehen des Aushebestreifens 30 werden mehrere der in der Mitte der Zigaretten-Gruppe 11 angeordneten Zigaretten 12 durch den Klappdeckel 41 angehoben, und zwar Zigaretten der drei Reihen 13, 14, 15 in stufenförmigem Versatz zueinander. Dadurch können sehr leicht Zigaretten 12 von Hand entnommen werden. Beim Schließen der Packung werden die Zigaretten 12 in diese zurückgedrückt unter Mitnahme des Aushebestreifens 30, der die Ausgangsposition erhält und dadurch für einen erneuten Aushebevorgang bereitliegt. Für diese mehrfache Anwendbarkeit des Aushebestreifens 30 ist von Bedeutung, daß dieser fest und nicht abreißbar mit dem Innenzuschnitt 16, nämlich mit der Rückwand 19, verankert bleibt.

Um zu vermeiden, daß der gesamte Zigarettenblock 10 bei der Zugbeanspruchung des Aushebestreifens 30 aus der Packung (Klappschachtel 39) herausgehoben wird, ist der Innenzuschnitt 16 durch Klebung innerhalb der Klappschachtel, und zwar innerhalb des Schachtelteils 40, verankert. Im vorliegenden Falle sind im Bereich der Vorderwand 18 (zwei) streifenförmige Klebungen 35, 36 zu beiden Seiten des Aushebestreifens 30 gebildet zur Verbindung des Innenzuschnitts 16 mit der Schachtelvorderwand 43. Im Bereich des Aushebestreifens 30 ist demnach der Zigarettenblock 10 besonders haltbar zu beiden Seiten des Aushebestreifens 30 in der Klappschachtel verankert. Eine weitere Klebung 37, hier in Gestalt eines Quadrats befindet sich im Bereich der Rückwand 19, und zwar in Verlängerung des Aushebestreifens 30. Klebung 37 dient zur Befestigung der Rückwand 19 an einer Schachtelrückwand 45.

## Patentansprüche

1. Zigaretten-Packung, insbesondere Klappschachtel, bei der eine Zigaretten-Gruppe in einen Innenzuschnitt (16) eingehüllt ist mit einem vom Innenzuschnitt (16) aufgrund von Stanzungen (Perforationen 28) durch Abziehen abtrennbaren Lappen (26), wobei an den Lappen (26) ein Aushebestreifen (30) anschließt, der sich in einer Vorderwand (18) des Innenzuschnitts (16) bis wenigstens in den Bereich einer Bodenwand (17) desselben erstreckt, **dadurch gekennzeichnet, daß** sich der Aushebestreifen (30) bis in den Bereich des abziehbaren Lappens (26) erstreckt und innerhalb desselben durch eine etwa U-förmige Lappenstanzlinie (33) abgegrenzt ist, derart, daß beim Abziehen des Lappens (26) eine gegenüber dem übrigen Teil des Innenzuschnitts (16) bzw. gegenüber der Vorderwand (18) desselben freiliegende Grifflasche (34) als Endbereich des Aushebestreifens (30) freigelegt ist.

## Claims

1. Cigarette pack, especially hinge-lid pack, in which a cigarette group is wrapped in an inner blank (16), with a flap (26) separable from the inner blank (16) by pulling off as a result of punchings (perforations 28), the flap (26) adjoining a lift-out strip (30) which extends in a front wall (18) of the inner blank (16) at least into the region of a bottom wall (17) of the latter, characterized in that the lift-out strip (30) extends into the region of the pull-off flap (26) and within the latter is delimited by an approximately U-shaped flap punching line (33), in such a way that, when the flap (26) is being pulled off, a gripping tab which is free relative to the remaining part of the inner blank or relative to the front wall of the latter and which is an end region of the lift-out strip is exposed.

## Revendications

1. Paquet de cigarettes, en particulier boîte à couvercle basculant, dans lequel un groupe de cigarettes est enveloppé dans une découpe intérieure (16) ayant une patte (26) détachable d'elle par tirage grâce à des découpures (perforations 28), à cette patte (26) étant jointe une bande de soulèvement (30) qui s'étend dans la paroi avant (18) de la découpe intérieure (16) jusqu'au moins dans la zone d'une paroi de fond (17) de celle-ci, caractérisé par le fait que la bande de soulèvement (30) s'étend jusque dans la zone de la patte retirable (26) et est délimitée à l'intérieur de celle-ci par une ligne découpée à peu près en forme de U (33), de façon telle que, au retrait de la patte (26), une languette de saisie (34) dégagée de la partie restante de la découpe intérieure (16), plus précisément de la paroi avant (18) de celle-ci, soit dégagée comme partie d'extrémité de la bande de soulèvement (30).
